# EUROPEAN PATENT APPLICATION

(11) **EP 0 683 339 A1**
(43) Date of publication of application: **22.11.1995**
(21) Application number: 95830187.1
(22) Date of filing: 09.05.1995
(51) Int. Cl.: F16K 11/044, G05D 23/13

(54) **Thermostatic mixer valve with basic adaptor**

(30) Priority: 18.05.1994 IT BS940049
(71) Applicant: SOL S.p.A., I-25065 Lumezzane S.S. (Brescia) (IT)
(72) Inventor: Moretti, Alberto, I-25060 Ponte Zanano (Brescia) (IT)
(74) Representative: Manzoni, Alessandro

(57) **Abstract**

The invention concerns a hot and cold water mixer valve of the type with a thermostatic regulator (11) and having a body (10a) with a first side passage (12) for hot water inlet at a first level, a second side passage (13) for cold water inlet at a second level, and a bottom and side passage (14) for water outlet towards a delivery spout. The valve body is fitted with a distributor-adaptor element (16) capable of receiving hot water and cold water from the bottom, in parallel with the valve axis, and of channelling the two types of water to their respective side passages (12, 13). The distributor-adaptor may also incorporate a pressure balancer (28).

## Description

The present invention generally pertains to the sector of taps and more particularly concerns a hot and cold water mixer valve with a built-in thermostatic regulator.

For the purpose of mixing hot and cold water in sanitary fittings various embodiments of mixer valves are known, among which also mixer valves incorporating thermostatic regulators. Such mixer valves generally comprise, inside a support body, a first element susceptible of rotation to control valve means designed to open and close the water outlet passages and a second element which is displaceable axially inside the first element so as to act on the opening of the hot and cold water inlet passages and vary the ratios of both types of water to be mixed. The thermostatic regulator is generally prepared for the displacements of said second element in order to automatically vary the flows of inflowing hot and cold water and thereby maintain a pre-set temperature of the mixed water delivered.

Such thermostatically controlled mixer valves mostly have hot and cold water inlet passages laterally on two levels and a water outlet below, from the bottom or at the side of the valve. Moreover, in sanitary fittings such as wash-basins, bidets, etc., where mixer valves are installed, hot and cold water usually arrive from below, that is from the bottom of the valve. For this reason application in situ of thermostatically controlled mixer valves has always posed problems for the difficulties of channelling two types of inflowing water to the level of the side inlet passages of the valve and of allowing installation of this type of valve also in taps designed to receive ordinary mixer valves without a thermostatic regulator.

It is an object of the present invention to obviate these problems in a simple and effective manner by combining the thermostatic mixer valve with bottom distributor-adaptors suitable to receive hot and cold water from below, to channel it towards the side inlet passages of the mixer valve and, after mixing, to convey the outlet water from the bottom towards the delivery spout of the fitting the valve is fitted on.

Advantageously, said bottom means may also contain a pressure balancer which, by automatically stabilizing the pressure of the inflowing hot and cold water, contributes to improving the performance and operating precision of the mixer valve.

Advantageously again, said means applied to the base of a mixer valve and containing, or otherwise, a pressure balancer may be configured for easy application in situ of such thermostatic valves also where ordinary mixer cartridges are used, instead and in replacement of the latter and with the benefit of thermostatic control over the temperature of the water delivered. In other words, the bottom means described are structured to give the mixer valve they are applied to the same structural, dimensional and functional features as the more common and widespread cartridge mixer valves without a thermostatic regulator, with water flowing in and out from below, that is from the bottom.

Said objects are achieved by a mixer valve with a thermostatic regulator as claimed in the 1st claim 1.

Further details of the invention will however become apparent from the continuation of the description made with reference to the accompanying drawings in which:
Fig. 1 shows a perspective view of a partial cross section of a thermostatic mixer valve.
Fig. 2 shows a longitudinal sectional view of the thermostatic mixer valve obtained at the hot and cold water inlet channels; and
Fig. 3 shows a longitudinal cross sectional view similar to that of Fig. 2 but obtained at the water outlet passage of the valve.

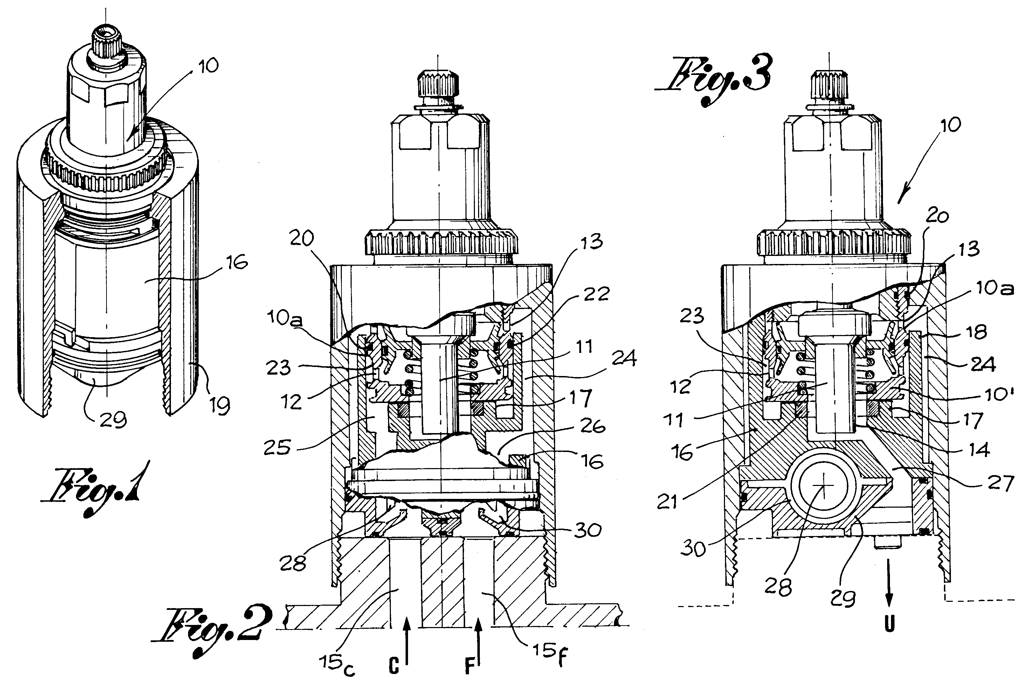

The hot and cold water mixer valve 10 is in itself known. It may be of any type incorporating a thermostatic regulator 11 and having a first side passage 12 for the inlet of hot water C at a first level, a second side passage 13 for the inlet of cold water F at a second level, and a bottom or side passage 14 for the outlet U of the water towards a delivery spout of a tap body 15 wherein the mixer valve is to be inserted. The hot water C and the cold water F arrive at the valve 10 from below, that is from the bottom, through supply pipes 15c and 15f respectively, which are connected to the tap body.

According to the present invention, the body 10a of such a thermostatic mixer valve 10 is combined with a basic distributor-adaptor 16 capable of receiving hot water C and cold water F from the bottom, in parallel with the valve axis, and of conveying both types of water to their respective side inlet passages 12, 13 in the valve in a radial direction.

The distributor-adaptor 16 is basically in the form of a cup with a bottom 17, which may fitted with positioning feet, and a peripheral wall 18 that rises orthogonally from the bottom 17. The distributor-adaptor 16 is located concentrically in an external body or sleeve 19 which couples air-tightly at the top with a seal 20 to the valve body 10a and whose bottom is to be anchored to the tap body.

To perform its function, the distributor adaptor 16 is fitted at the base of the valve so as to rest, with its bottom 17, against the bottom 10' of the valve with a seal 21 interposed, so that its peripheral wall 18 surrounds the valve at least to a height between the two levels of the hot C and cold F water inlet passages 12, 13. At such a height, a seal 22 ensures seal between the wall 18 and the valve body 10a. Between the bottom 17 and the seal 22, the peripheral wall 18 of the distributor-adaptor 16 defines, with the valve body 10a, a first longitudinal compartment or pipe 23 which reaches at least the level of the first side passage 12 for the inlet of hot water C.

Between the peripheral wall 18 and the external body or sleeve 19 surrounding the distributor-adaptor 16, a second longitudinal compartment or pipe 24 is provided which reaches the level of the second side passage 13 for the inlet of the cold water F.

The bottom 17 of the distributor-adaptor 16 comprises:
- a first inlet hole 25 which coincides and communicates, on the one hand, with the pipe 15c supplying hot water C and, on the other hand, with the first longitudinal compartment or pipe 23 which reaches the level of the first side inlet passage 12 of the valve;
- a second inlet hole 26 that coincides and communicates, on the one hand, with the pipe 15f supplying cold water F and, on the other hand, with the second longitudinal compartment or pipe 24 that reaches the level of the second side passage 13 of the valve;
- a third hole 27 coinciding with the outlet passage 14 of the valve bottom and designed to channel the water to the delivery spout.

Therefore the distributor-adaptor 16 receives hot and cold water separately from below, in a direction parallel to the axis of the valve, distributes it separately sideways on two levels to the side passages 12, 13 of the water inlet in the valve for mixing and then channels the outflowing mixed water from the valve towards the delivery spout.

It is to be noted that the above described distributor-adaptor may also be provided with a pressure balancer 28, known in itself. For this purpose, the distributor-adaptor is fitted with a bottom 29 to define together a housing 30 for the balancer 28.

Said bottom shall in its turn have holes or openings coinciding with the passages 12, 13 and 14 provided in the bottom of the adaptor and may be fitted with feet 31 for correct positioning in situ of the mixer valve.

## Claims

1. A hot and cold water mixer valve of the type incorporating a thermostatic regulator (11) and having a body (10a) with a first side passage (12) for hot water inlet at a first level, a second side passage (13) the cold water inlet at a second level, and a bottom or side passage (14) for the outlet of water towards a delivery spout of a tap body in which the valve is to be inserted and in which hot water and cold water arrive from below, that is from the bottom, through two supply pipes (15c, 15f) connected thereto, **characterized** in that a distributor-adaptor element (16) is applied to the valve body (10a) and is capable of receiving hot water and cold water from the bottom, in parallel with the valve axis, and of channelling the two types of water to their respective valve inlet side passages (12, 13) in a radial direction.

2. A mixer valve as claimed in claim 1, wherein the distributor-adaptor (16) is in the shape of a cup with a bottom wall (17) and a peripheral wall (18) rising up from the bottom, the bottom wall (17) coupling with a seal (21) to the bottom (10') of the valve body (10a) and the peripheral wall (18) surrounding the valve body (10a) at least to a height between the two levels of the water inlet side passages (12, 13), a seal (22) between said two levels making a hydraulic seal between the valve body and the peripheral wall of the distributor-adaptor.

3. A mixer valve as claimed in claims 1 and 2, wherein the peripheral wall (18) of said distributor-adaptor (16) defines with the valve body (10a) a first longitudinal compartment or pipe (23) which reaches the level of the first side passage (12) for the hot water inlet, and with a concentric external body or sleeve (19) a second longitudinal compartment or pipe (24) which reaches the level of the second cold water inlet side passage (13), and wherein the bottom (17) of the distributor-adaptor (16) comprises: a first inlet hole (25) setting said first longitudinal compartment or pipe (23) in communication with the pipe (15c) supplying hot water; a second hole or inlet (26) setting said second longitudinal compartment or pipe (24) in communication with the pipe (15f) supplying cold water; and a third hole (27) setting the water outlet passage (14) of the valve in communication with the delivery spout of a tap.

4. A mixer valve as claimed in the previous claims, **characterized** furthermore in that a pressure balancer (28) is housed and held in a housing (30) provided in the bottom (17) of said distributor-adaptor (16) on the path of hot water and cold water from the supply pipes (15c, 15f) to the respective longitudinal compartments or pipes (23, 24) through the inlet holes (25, 26) in the bottom of the distributor-adaptor.

5. A mixer valve as claimed in claim 4, wherein the distributor-adaptor (16) is fitted with a bottom (27) applied to its bottom (17) to thereby define the housing for the pressure balancer (28) and having holes or openings coinciding with the bottom holes of the balancer-adaptor.
